(19) Europäisches Patentamt
European Patent Office
Office européen des brevets

(11) Publication number: **0 430 102 A2**

(12) **EUROPEAN PATENT APPLICATION**

(21) Application number: **90122415.4**

(22) Date of filing: **23.11.90**

(51) Int. Cl.5: **C08G 77/46**, C08G 77/14, C09D 7/00

(30) Priority: **24.11.89 JP 303275/89**

(43) Date of publication of application: **05.06.91 Bulletin 91/23**

(84) Designated Contracting States: **BE DE FR GB Bulletin**

(71) Applicant: **DOW CORNING KABUSHIKI KAISHA**
**507-1, Kishi Yamakita-machi**
**Ashigarakami-gun Kanagawa(JP)**

(72) Inventor: **Mizushima, Kiyoshi**
**1-48 Sakamoto-machi**
**Yokosuka-shi, Kanagawa(JP)**
Inventor: **Akinaga, Keiichi**
**1673-1, Kaneko, Ohi-machi**
**Ashigarakami-gun, Kanagawa(JP)**

(74) Representative: **Spott, Gottfried, Dr. et al**
**Spott Weinmiller & Partner**
**Sendlinger-Tor-Platz 11**
**W-8000 München 2(DE)**

(54) **Silicone paint additive.**

(57) An organopolysiloxane terpolymer, containing at least one epoxy group and at least one polyoxyalkylene group, each bonded to silicon atoms thereof through a divalent hydrocarbon group, is disclosed. The terpolymer of the present invention finds particular utility as in additive to paint compositions, imparting improved recoating and steam resistance character to the hardened paint films.

EP 0 430 102 A2

## SILICONE PAINT ADDITIVE

The present invention relates to a silicone paint additive which can be added to various paints. More particularly, this invention relates to a silicone terpolymer containing epoxy and polyoxyalkylene groups.

Various paint additives are usually used in order to improve the properties of paints or hard coating films produced therefrom. For example, paint additives comprising polydimethylsiloxane or various modified silicones have been used in order to impart a high slipperiness and abrasion resistance to the surface of the hardened paint film. In particular, paint additives comprising a polyoxyalkylene/siloxane copolymer are often used. However, the paints containing these ordinary silicone paint additives are problematic because:

(1) the surface of a hardened coating film produced from the paint causes such significant cissing that, when the same or another kind of paint is applied to the hardened coating film, the latter repels the former to make so-called "recoating" unsatisfactory. The term of art "cissing" is used herein to denote the gathering of a wet film into drops or streaks, leaving parts of the surface bare or imperfectly covered.

(2) when a hardened coating film of the paint is exposed to boiling water or overheated saturated steam, the slipperiness of the surface thereof is so seriously impaired that the surface is highly susceptible to marring. Under these circumstances, a paint additive free from these problems is very desirable.

The object of the present invention is to overcome these problems and to provide a silicone paint additive which, when added to a paint, gives a coating film having a hardened surface which does not cause significant cissing and which has a slipperiness which is not impaired even when exposed to boiling water or overheated saturated steam. The present invention therefore relates to an organopolysiloxane terpolymer paint additive having an epoxy group and a polyoxyalkylene group bonded to silicon atoms in its molecule.

The organopolysiloxane terpolymer is represented by the average general formula

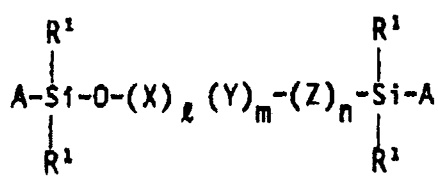

wherein

X represents

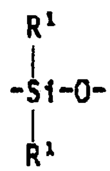

Y represents

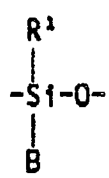

Z represents

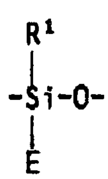

$\ell$ is 0 to 500, m is 1 to 300, n is 1 to 100, A is selected from the group consisting of hydrogen, a monovalent hydrocarbon group, a substituted monovalent hydrocarbon group, B and E, $R^1$ is selected from the group consisting of a monovalent hydrocarbon group and a substituted monovalent hydrocarbon group,

B is a polyoxyalkylene group having the average formula
$-(R^2)_a-O-(C_2H_4O)_b-(C_3H_6O)_c-R^3$
in which $R^2$ is a divalent hydrocarbon group, $R^3$ is selected from the group consisting of hydrogen, an alkyl Group. an aryl group and an acyl group, a is a positive integer and b and c are each integers having a value of 0 to 150 with the proviso that (b + c) is 1 to 150 and E is a monovalent organic group containing an epoxy group of the formula

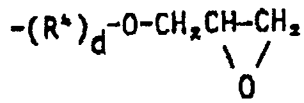

in which $R^4$ is a divalent hydrocarbon group and d is a positive integer.

In the present invention, specific organopolysiloxane terpolymers are used as the indispensable component of the paint additive. These coumpounds are represented by the average general formula (I):

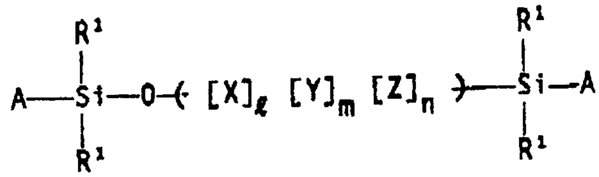

(I)

wherein:

X represents

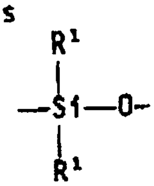

Y represents

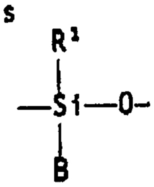

Z represents

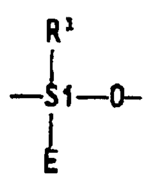

$\ell$ represents a number of 0 to 500,
m represents a number of 1 to 300,
n represents a number of 1 to 100,
A represents a hydrogen atom, a substituted or unsubstituted monovalent hydrocarbon group, B or E,
$R^1$ represents a substituted or unsubstituted monovalent hydrocarbon group,
B represents a polyoxyalkylene group of the average general formula (II):
$-(R^2)_a-O-(C_2H_4O)_b-(C_3H_6O)_c-R^3$ (II)
in which:
$R^2$ represents a divalent hydrocarbon group,

$R^3$ represents a hydrogen atom, an alkyl group, an aryl group or an acyl group,
a represents a positive integer, and b and c each represent 0 or a positive integer of 150 or less with the proviso that (b + c) is a number of 1 to 150,
and
E represents a monovalent organic group having an epoxy group of the general formula (III):

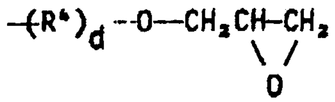

(III)

in which:
$R^4$ represents a divalent hydrocarbon group, and
d represents a positive integer.

In the above general formula (I), the order of bonding of blocks X, Y and Z is not particularly limited. The number of the polyoxyalkylene groups B in the organopolysiloxane molecule is m to (m + 2), and the number of recurring blocks, a, b or c, in one polyoxyalkylene group B may be different from that in another polyoxyalkylene group B. Further, the number of the organic groups, E, in the organopolysiloxane molecule is n to (n + 2), and the number of recurring blocks, d, in one organic group E may be different from that in another organic group E.

The organopolysiloxane terpolymer constituting the silicone paint additive of the present invention may be any of those having at least one functional organic group bonded to a silicon atom and having an epoxy group and a substituted or unsubstituted polyoxyalkylene group bonded to a silicon atom in its molecule, as described above. These organopolysiloxanes are not particularly limited otherwise, and say have, for example, straight-chain, branched or cyclic molecular structures.

The modified organopolysiloxane can be produced by, for example, the addition reaction of a hydrogen-containing organopolysiloxane having an average composition of the following formula (A) with an allylated polyoxyalkylene, an allylated glycidyl ether and/or an allylated cyclohexene monoepoxide. The reaction can be conducted by, for example, a process described in Japanese Patent Publication No. 9969/1958 or No. 1293/1961.

$$R^1_e H_f SiO_{\frac{4-(e+f)}{2}}$$

In formula (A), e represents a number of 1, 2 or 3, and f is selected such that at least 2 hydrogen atoms are present in the molecule and that the average of (e + f) in the molecule is in the range of 1.0 to 2.2.

Particularly preferred, organopolysiloxane terpolymers of the present invention are those of the above general formula (I) wherein $R^1$ represents a methyl group, $\ell$ represents a number of 10 to 200, m represents a number of 1 to 50, n represents a number of 1 to 50, $R^2$ in B represents a methylene group, $R^3$ in B represents a hydrogen atom or an acyl group, a in B represents a number of 1 to 10, b in B represents a number of 1 to 30, c in B represents a number of 0 to 30, $R^4$ in E represents a methylene group and d in E represents a number of 1 to 10.

The silicone paint additive of the present invention can be added to a paint by a process wherein the specified modified organopolysiloxane terpolymer is directly added to the paint, a process wherein the organopolysiloxane terpolymer is dissolved in a suitable organic solvent and the resulting solution is added to the paint, or a process wherein the organopolysiloxane terpolymer is dissolved or dispersed in water or the like and the resulting solution or dispersion is added to the paint.

The silicone paint additive of the present invention is preferably used in such an amount that the amount of the organopolysiloxane terpolymer is about 0.001 to about 10% by weight, preferably 0.01 to 2% by weight, based on the solid content of the paint. When it is less than about 0. 001% by weight, the effect of preventing the slipperiness of the surface of the hardened coating film from being deteriorated by boiling water or overheated saturated steam is insufficient and, on the contrary, when it exceeds about 10% by weight, no sufficient effect of controlling the cissing of the surface of the hardened coating surface can be obtained.

The paints to which the silicone paint additive of the present invention can be added are not particularly limited. The silicone paint additive can be added to various paints, such as oil-base paints, water-base

paints, oil-base varnishes, alcohol-base varnishes, cellulose derivative paints, synthetic resin paints, such as phenolic, aminoalkyd, urethane, diallyl phthalate, epoxy, polyester and polyacrylic points, and emulsion paints such as polyvinyl chloride, polyvinyl acetate and polyacrylic emulsion paints.

The silicone paint additive of the present invention is particularly suitable for paints to be applied to metallic outer surfaces, such as acrylic, polyester, epoxy, vinyl, and alkyd paints.

The following Examples will further illustrate the present invention, but by no means limit the invention, which is delineated in the appended claims.

**Example 1**

To a reaction vessel provided with a stirrer there was added 88.2 g of hydrogen-containing polysiloxane of the following formula (1), 3.94 g of allyl glycidyl ether of the following formula (2), 155.9 g of a polyether of the following formula (3) and 62.5 g of toluene.

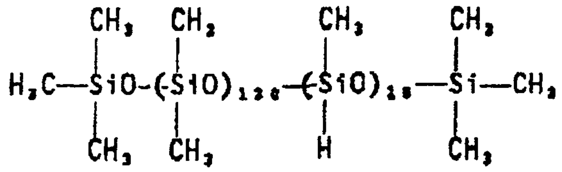

(1)

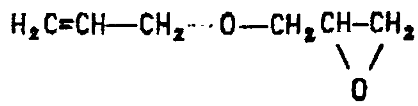

(2)

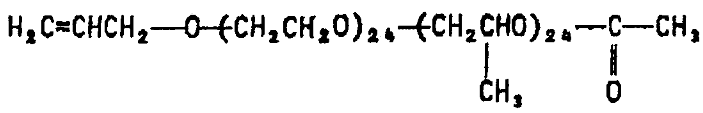

(3)

The contents of the vessel were heated while stirring and, when the temperature reached 80 °C, 0.34 g of a 2% solution of chloroplatinic acid in isopropyl alcohol was added thereto. The temperature was further elevated to 100 °C slowly in 1 h and, when it reached 100 °C, additional 0.34 g of 2% solution of chloroplatinic acid in isopropyl alcohol was added thereto to continue the reaction for an additional hour. After the completion of the reaction, toluene was distilled off to give 248 g of a brown, transparent oily compound having a viscosity of 3,500 cst at 25 °C.

The compound was analyzed by infrared absorption spectroscopy and nuclear magnetic resonance spectroscopy (NMR) to reveal that it was an organopolysiloxane having a structure of the following formula (4):

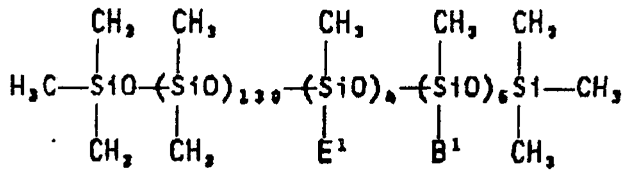 (4)

wherein:

$B^1$ represents

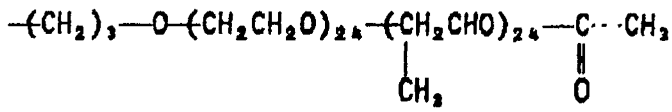 and

$E^1$ represents

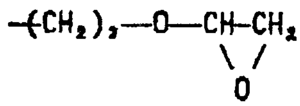

This modified organopolysiloxane will be referred to as "paint additive 1". It was added to a polyester paint in an amount of 0.1, 0.3 or 0.5% by weight based on the solid content of the paint. Thus three additive-containing paints were prepared. They were each applied to the surfaces of two aluminum plates with a wire bar to prepare two test pieces for each additive-containing paint. The paint was hardened at 200°C for 10 min to form a hardened coating film.

The initial value a of the coefficient of dynamic friction of one of the test pieces was determined and then the test piece was treated in an overheated saturated steam atmosphere at 110°C in a pressure cooker testing machine for 30 min. The coefficient of dynamic friction, $\beta$, of the hardened coating film of the test piece thus treated was determined.

The other test piece was treated as follows: the same polyester paint but free from the above organopolysiloxane (4), was applied to the surface of the hardened coating film and the occurrence of cissing of the polyester paint was observed. The test pieces were evaluated according to the following criteria:

◎: no cissing caused at all,

O: only slight cissing caused,
Δ: considerable cissing caused, and
x: serious cissing caused.
The results are given in Table 1.

**Example 2**

To a reaction vessel provided with a stirrer there was added 140.1 g of a hydrogen-containing polysiloxane of the following formula (5), 7.24 g of allyl glycidyl ether of the following formula (6), 95.42 g of a polyether of the following formula (7) and 62.5 g of toluene.

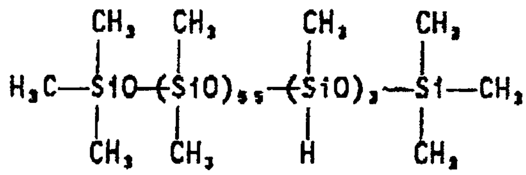

(5)

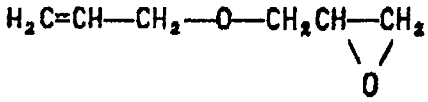

(6)

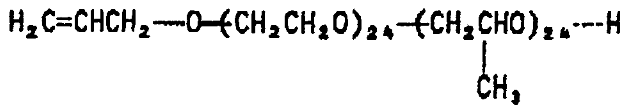

(7)

After the same reaction and treatment as those of Example 1, 242 g of a brown transparent oily compound having a viscosity of 1,500 cst at 25°C was obtained. From the infrared absorption spectrum and NMR, the compound was recognized to be an organopolysiloxane having a structure of the following formula (8):

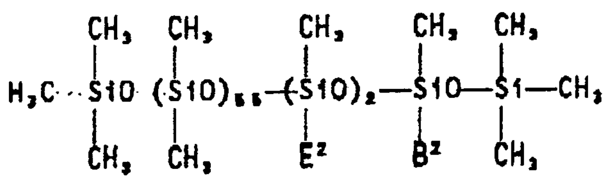

(8)

wherein

$B^2$ represents

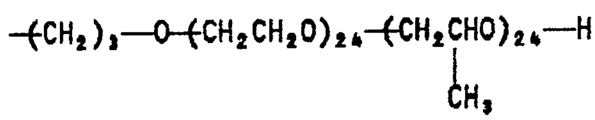

and

$E^2$ represents

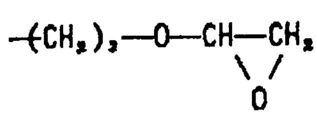

An additive-containing paint was prepared in the same manner as that of Example 1 except that the paint additive 1 was replaced with a paint additive 2 comprising the organopolysiloxane (8) thus produced. The test pieces were prepared in the same manner as that of Example 1 using the above additive-containing paint. The results of the evaluation are given in Table 1.

**Example 3**

To a reaction vessel provided with a stirrer, there was added 176.5 g of a hydrogen-containing polysiloxane of the following formula (9), 14.46 g of allyl glycidyl ether of the following formula (10), 44.6 g of a polyether of the following formula (11) and 62.5 g of toluene.

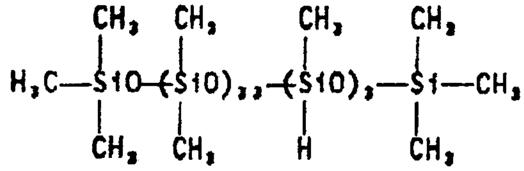

(9)

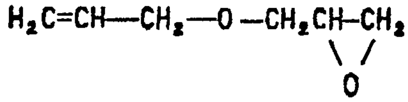

(10)

$$H_2C{=}CHCH_2{-}O{-}(CH_2CH_2O)_{12}{-}H \qquad (11)$$

After the same reaction and treatment as those of Example 1, 236 g of a brown transparent oily compound having a viscosity of 600 cst at 25°C was obtained. From the infrared absorption spectrum and NMR, the compound was recognized to be an organopolysiloxane having a structure of the following formula (12):

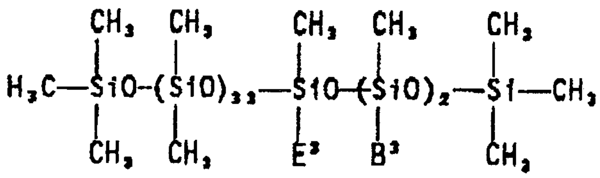

(12)

wherein:

$B^3$ represents

$-(CH_2)_3{-}O{-}(CH_2CH_2O)_{12}{-}H$ and

$E^3$ represents

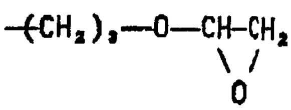

An additive-containing paint was prepared in the same manner as that of Example 1 except that the paint additive 1 was replaced with a paint additive 3 comprising the modified organopolysiloxane (12). The test pieces were prepared in the same manner as that of Example 1 using the above additive-containing paint. The results of the evaluation ore given in Table 1.

**Example 4**

To a reaction vessel provided with a stirrer, there was added 153.3 g of a hydrogen-containing polysiloxane of the following formula (13), 6.83 g of vinylcyclohexene monoepoxide of the following formula (14), 83.0 g of a polyether of the following formula (15) and 62.5 g of toluene.

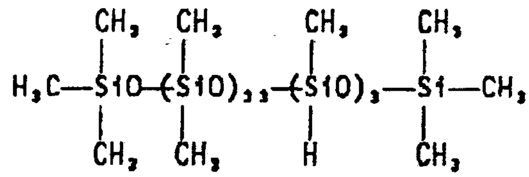

(13)

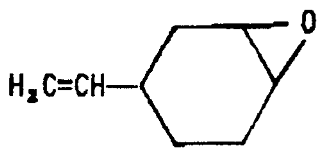

(14)

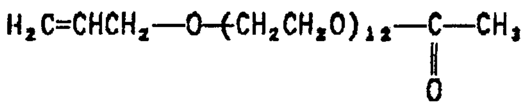

(15)

After the some reaction and treatment as those of Example 1, 243 g of a brown transparent oily compound having a viscosity of 400 cst at 25° C was obtained. From the infrared absorption spectrum and NMR, the compound was recognized to be an organopolysiloxane having a structure of the following formula (16):

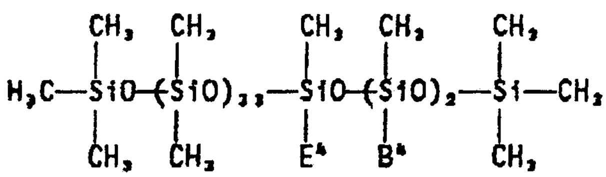

(16)

wherein:

$B^4$ represents

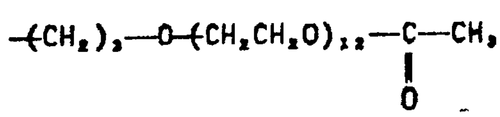

and

$E^4$ represents

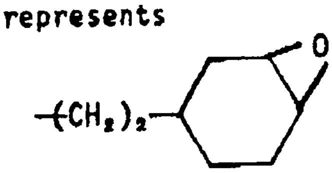

An additive-containing paint was prepared in the same manner as that of Example 1 except that the paint additive 1 was replaced with a paint additive 4 comprising the organopolysiloxane (16). The test pieces were prepared in the same manner as that of Example 1 using the above additive-containing paint. The results of the evaluation are given In Table 1.

**Example 5**

An additive-containing paint was prepared using the paint additive 1 produced in Example 1 in the same manner as that of Example 1 except that the polyester paint was replaced with an aqueous acrylic paint. The test pieces were prepared in the same manner as that of Example 1 except that the additive-containing

paint thus prepared was used. The results of the evaluation are given in Table 1.

**Comparative Example**

To a reaction vessel provided with a stirrer, there was added 58.2 g of a hydrogen-containing polysiloxone of the following formula (17), 192.0 g of a polyether of the following formula (18) and 62.5 g of isopropyl alcohol.

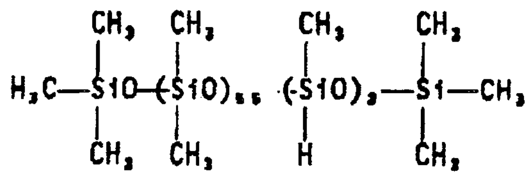

(17)

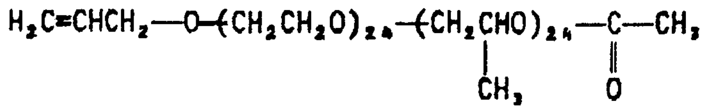

(18)

The contents of the vessel were heated while stirring and, when the temperature reached 80° C, 0.68 g of 2% solution of chloroplatinic acid in isopropyl alcohol was added thereto and the reaction was conducted for 2 h. After the completion of the reaction, isopropyl alcohol was distilled off to give 250 g of a brown transparent oily compound having a viscosity of 2,900 cst at 25° C.

From the analysis of the infrared absorption spectrum and nuclear magnetic resonance spectrum (NMR) of the compound, it was recognized to be an organopolysiloxane of the following formula (19):

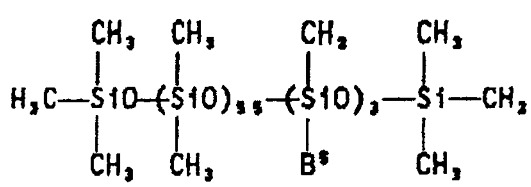

(19)

wherein:

B⁵ represents

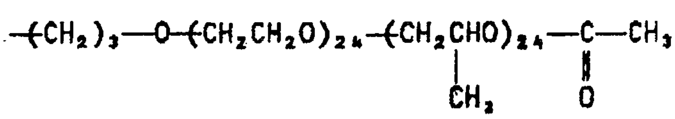

An additive-containing paint was prepared in the same manner as that of Example 1 except that the paint additive 1 was replaced with the comparative paint additive comprising the epoxy group-free organopolysiloxane (19). The test pieces were prepared in the same manner as that of Example 1 using the above additive-containing paint. The results of the evaluation are given in Table 1.

Table 1

| Test item | Amount of paint additive (% by weight) | | | | | | | | |
|---|---|---|---|---|---|---|---|---|---|
| | 0.1 | | | 0.3 | | | 0.5 | | |
| | dynamic friction coefficient | | cissing | dynamic friction coefficient | | cissing | dynamic friction coefficient | | cissing |
| | α | β | | α | β | | α | β | |
| Example 1 | 0.10 | 0.18 | ◎ | 0.09 | 0.14 | ◎ | 0.08 | 0.14 | ○ |
| Example 2 | 0.07 | 0.11 | ◎ | 0.06 | 0.10 | ○ | 0.06 | 0.09 | △ |
| Example 3 | 0.09 | 0.16 | ◎ | 0.08 | 0.14 | ○ | 0.08 | 0.13 | △ |
| Example 4 | 0.10 | 0.17 | ◎ | 0.10 | 0.16 | ◎ | 0.09 | 0.15 | ○ |
| Example 5 | 0.08 | 0.13 | ○ | 0.07 | 0.13 | △ | 0.07 | 0.13 | △ |
| Comparative Example | 0.10 | 0.40 | ○ | 0.09 | 0.38 | ○ | 0.08 | 0.38 | △ |

It is apparent from the results given in Table 1 that the hardened coating film prepared from the point containing the silicone paint additives of the present invention causes a reduced cissing. Therefore, when a paint is further applied thereto, no cissing is caused. Moreover, when the hardened coating is exposed to boiling water, or overheated saturated steam, the slipperiness of the surface is scarcely impaired.

## Claims

1. An organopolysiloxane terpolymer represented by the overage general formula

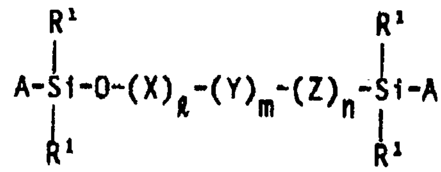

wherein

X represents

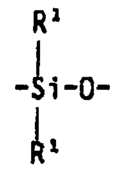

Y represents

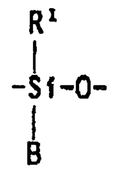

Z represents

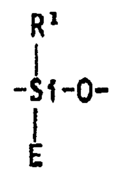

$\ell$ is 0 to 500, m is 1 to 300, n is 1 to 100, A is selected from the group consisting of hydrogen, a monovalent hydrocarbon group, a substituted monovalent hydrocarbon group, B and E, $R^1$ is selected from the group consisting of a monovalent hydrocarbon group and a substituted monovalent hydrocarbon group, B is a polyoxyalkylene group having the average formula

$-(R^2)_a-O-(C_2H_4O)_b-(C_3H_6O)_c-R^3$

in which $R^2$ is a divalent hydrocarbon group, $R^3$ is selected from the group consisting of hydrogen, on alkyl group, an aryl group and an acyl group, a is a positive integer and b and c are each integers having a value of 0 to 150 with the proviso that (b + c) is 1 to 150 and E is a monovalent organic group containing an epoxy group of the formula

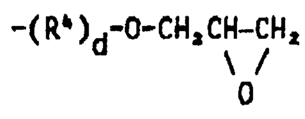

in which $R^4$ is a divalent hydrocarbon group and d is a positive integer.

2. In a paint composition containing a silicone paint additive, the improvement comprising using as said silicone paint additive the organopolysiloxane terpolymer according to claim 1.